# EUROPÄISCHE PATENTSCHRIFT

(11) **EP 2 414 122 B1**
(45) Veröffentlichungstag und Bekanntmachung des Hinweises auf die Patenterteilung: **08.05.2013**
(21) Anmeldenummer: 10720247.5
(22) Anmeldetag: 30.03.2010
(51) Int. Cl.: B23B 51/00

(54) **DREHANGETRIEBENES MEHRFASEN-STUFENWERKZEUG**
ROTATIONALLY DRIVEN STEPPED TOOL WITH SEVERAL BEVELS
OUTIL ÉTAGÉ AVEC PLUSIEURS CHANFREINS ENTRAINÉ EN ROTATION

(30) Priorität: 30.03.2009 DE 102009003700
(43) Veröffentlichungstag der Anmeldung: 08.02.2012
(73) Patentinhaber: Gühring OHG, 72458 Albstadt (DE)
(72) Erfinder: BOZKURT, Lutfi, 72474 Winterlingen (DE)
(74) Vertreter: Meitinger, Thomas Heinz
(86) Internationale Anmeldenummer: PCT/DE2010/000366
(87) Internationale Veröffentlichungsnummer: WO 2010/115404

(56) Entgegenhaltungen:
- DE-U- 1 785 012
- US-A- 1 747 117

## Beschreibung

Die Erfindung betrifft ein drehangetriebenes Mehrfasen-Stufenwerkzeug, insbesondere einen Stufenbohrer zum Bohren ins Volle, mit mehreren, in Schnitt- und Vorschubrichtung gestaffelt angeordneten, jeweils ein- oder mehrschneidigen Schneidstufen gemäß dem Oberbegriff des Anspruchs 1.

In der Fertigungstechnik kommen häufig Bearbeitungen vor, die mehrstufig sind. So geht es beispielsweise darum axial gestaffelte Bohrungen verschiedener Durchmesser herzustellen, häufig aber auch Bohrungen mit Ansenkungen oder Kombinationen von verschiedenen Bohrungen und Ansenkungen. Um die Bearbeitungszeiten so gering als möglich zu halten, wurden Kombinationswerkzeuge entwickelt, um die vorstehend genannten verschiedenen Bearbeitungen in einem Arbeitsschritt herzustellen. Zu derartigen Kombiriationswerkzeugen zählen Stufenbohrer, Bohrsenker, Stufensenker, Stufenreibahlen, etc., die im Folgenden - wo zweckmäßig - allgemein als Stufenwerkzeuge bezeichnet sind.

Beispiele für derartige Stufenwerkzeuge finden sich in den Druckschriften DE 299 01 414 U1, DE 36 10 016 A1, DE 200 15 550 U1, DE 20 2007 015 595 U1, DE 1785012 U oder DE 1 041 324 A. Bei den in der DE 299 01 414 U1, DE 36 10 016 A1 und DE 200 15 550 U1 beschriebenen Stufenwerkzeugen werden die in mehreren Schneidstufen jeweils erzeugten Späne über gemeinsame Spannuten abgeführt. Das in der DE 20 2007015595 U1 beschriebene Stufenwerkzeug weist zwei Schneidstufen mit jeweils eigenen Spannuten auf. Bei dem in der DE 1 041 324 A beschriebenen Stufenbohrer handelt es sich quasi um eine Kombination der beiden vorgenannten Stufenwerkzeuge, bei der einer ersten, dritten und fünften Schneidstufe und einer zweiten und vierten Schneidstufe jeweils drei Spannuten zugeordnet sind. Die DE 1 785 012 U zeigt und beschreibt ein gattungsgemäßes Mehrfasen-Stufenwerkeug in Gestalt eines Mehrfasen-Stufenbohrers mit zwei Schneidstufen verschiedener Bearbeitungsdurchmesser, wobei jeder Schneidstufe eigene Spannuten zugeordnet sind.

Herkömmliche Mehrfasen-Stufenwerkzeuge haben den Nachteil, dass es im Bereich einer Schneidstufe mit relativ kleinem Bearbeitungsdurchmesser aufgrund der Tatsache, dass das für die Spanabfuhr zur Verfügung stehende Volumen je Spannut meist eng bemessen ist, unter ungünstigen Bedingungen leicht zu einem Spanstau kommen kann. Die Gefahr eines Spanstaus nimmt beispielsweise mit der axialen Länge einer Schneidstufe mit kleinem Bearbeitungsdurchmesser zu.

Ausgehend von einem Mehrfasen-Stufenwerkzeug, wie es in der DE 1 785 012 U bekannt ist, liegt der Erfindung die Aufgabe zugrunde, ein Mehrfasen-Stufenwerkzeug so weiterzuentwickeln, dass eine zuverlässige Spanabfuhr, insbesondere im Bereich einer Schneidstufe mit einem relativ kleinen Bearbeitungsdurchmesser, gewährleistet ist.

Diese Aufgabe wird gelöst durch ein Mehrfasen-Stufenwerkzeug mit den Merkmalen des Anspruchs 1.

Das erfindungsgemäße drehangetriebene Mehrfasen-Stufenwerkzeug weist mehrere in (Umfangs- oder Dreh- bzw.) Schnitt- und (Axial- bzw.) Vorschubrichtung gestaffelt angeordnete, jeweils ein- oder mehrschneidige Schneidstufen mit jeweils einer der Anzahl der Schneiden entsprechenden Anzahl von Spannuten auf. Bei einschneidigen Schneidstufen weisen die Schneidstufen daher jeweils genau eine Schneide sowie eine der Schneide zugeordnete Spannut auf, während bei zwei-, drei-, etc.-schneidigen Schneidstufen die Schneidstufen eine entsprechende Anzahl von Schneiden sowie eine der Anzahl der Schneiden entsprechende Anzahl von Spannuten, die jeweils einer Schneide zugeordnet sind aufweisen. Jede Schneidstufe hat daher eine der Anzahl der jeweils vorhandenen Schneiden entsprechende Anzahl von Spannuten. In Umfangsrichtung benachbarte Spannuten sind jeweils durch einen Steg voneinander abgegrenzt. Die Spannuten und damit auch die dazwischen liegenden Stege können bezüglich der Drehachse des Mehrfasen-Stufenwerkzeugs wendelförmig oder geradlinig verlaufen.

Die Staffelung der Schneidstufen, die verschiedene Bearbeitungsdurchmesser aufweisen, in Schnitt- und Vorschubrichtung sieht bei zwei Schneidstufen eine in Schnitt- und Vorschubrichtung erste oder voreilende Schneidstufe mit einem kleineren Bearbeitungsdurchmesser und eine in Schnitt- und Vorschubrichtung zweite oder nacheilende Schneidstufe mit einem größeren Bearbeitungsdurchmesser vor. Bei mehr als zwei Schneidstufen sind jeweils zwei in Schnitt- und Vorschubrichtung aufeinander folgende Schneidstufen aus einer in Schnitt- und Vorschubrichtung voreilenden Schneidstufe und einer in Schnitt- und Vorschubrichtung nacheilenden Schneidstufe, beispielsweise die erste Schneidstufe und die zweite Schneidstufe oder die zweite Schneidstufe und die dritte Schneidstufe, etc., gebildet. Eine voreilende Schneidstufe hat stets einen kleineren Bearbeitungsdurchmesser hat als eine nacheilende Schneidstufe.

Wie oben erwähnt, sind bei dem erfindungsgemäßen Mehrfasen-Stufenwerkzeug in Umfangsrichtung benachbarte Spannuten zweier in Schnitt- und Vorschubrichtung aufeinander folgender Schneidstufen jeweils durch einen Steg voneinander abgegrenzt. Ungeachtet ihrer Zuordnung zu verschiedenen Schneidstufen sind die Spannuten vorzugsweise von Beginn der jeweiligen Schneidstufe bis zum Auslauf am Werkzeugschaft durchgängig ausgebildet, so dass die Spannuten einer voreilenden Schneidstufe länger sind als die Spannuten einer nacheilenden Schneidstufe, sofern die Spannuten in axialer Richtung an derselben Stelle auslaufen.

Erfindungsgemäß sind die in Umfangsrichtung benachbarten Spannuten zweier in Schnitt- und Vorschubrichtung aufeinander folgender Schneidstufen, d.h. einer voreilenden Schneidstufe mit einem kleineren Bearbeitungsdurchmesser und einer nacheilenden Schneidstufe mit einem größeren Bearbeitungsdurchmesser, über ein umfangsseitig offenes, den dazwischen liegenden Steg durchbrechendes Spanfenster verbunden. Bezogen auf die voreilende Schneidstufen liegt das Spanfenster daher entweder in der jeweils zugeordneten Spanfläche der voreilenden Schneidstufe oder aber für den Fall, dass das Mehrfasen-Stufenwerkzeug aus einem mit Schneidplatten bestückten Trägerkörper gebildet ist, in der die jeweils zugeordnete Spanfläche verlängernden Fläche der Spannut der voreilenden Schneidstufe.

Bei den beiden in Schnitt- und Vorschubrichtung aufeinander folgenden Schneidstufen, deren in Umfangsrichtung benachbarte Spannuten jeweils durch ein Spanfenster verbunden sind, handelt es sich vorzugsweise um die erste und zweite Schneidstufe, da Spanabfuhrprobleme eher im Bereich der ersten Schneidstufe auftreten, die den kleinsten Bearbeitungsdurchmesser aufweist. Alternativ oder zusätzlich zur ersten und zweiten Schneidstufe lassen sich aber auch in den Umfangsrichtung benachbarte Spannuten der zweiten und dritten Stufe, der dritten und vierten Stufe, etc., d.h. zweier beliebige in Schnitt- und Vorschubrichtung aufeinander folgender Schneidstufen, durch ein Spanfenster in dem dazwischen liegenden Steg verbinden.

In jedem Fall kann über das z.B. durch Freifräsung oder Freischliff hergestellte Spanfenster zumindest ein Teil der Späne, die in der Spannut einer in Schnitt- und Vorschubrichtung voreilenden Schneidstufe mit kleinerem Bearbeitungsdurchmesser ablaufen, in die in Umfangsrichtung benachbarte Spannut einer in Schnitt- und Vorschubrichtung nacheilenden Schneidstufe mit größerem Bearbeitungsdurchmesser ausweichen. Die Spanabfuhr der in der voreilenden Schneidstufe erzeugten Späne erfolgt somit in Erstreckungsrichtung der Spannuten bis zum Erreichen des Spanfensters allein über die jeweilige Spannut der voreilenden Schneidstufe und ab Erreichen des Spanfensters sowohl in der jeweiligen Spannut der voreilenden Schneidstufe als auch in der in Umfangsrichtung benachbarten Spannut der nacheilenden Schneidstufe. Insgesamt steht daher für die Spanabfuhr der in einer voreilenden Schneidstufe erzeugten Späne ein vergrößertes Volumen zur Verfügung, wodurch sich gerade bei einem sehr kleinen Bearbeitungsdurchmesser einer voreilenden Schneidstufe eine verbesserte Spanabfuhr erzielen lässt. Dank der verbesserten Spanabfuhr lässt sich ggf. die radiale Tiefe der Spannut(en) der voreilenden Schneidstufe eng bemessen, um z.B. einen großen Kerndurchmesser zu erhalten.

Das erfindungsgemäße Mehrfasen-Stufenwerkzeug kommt insbesondere in Gestalt eines Mehrfasen-Stufenbohrers zum Anfertigen von Injektorbohrungen in einem Zylinderkopf zum Einsatz. Die einzelnen Schneidstufen, beispielsweise drei Schneidstufen, sind vorzugsweise jeweils mehrschneidig mit in Umfangsrichtung äquidistant angeordneten Stirn- und Umfangsschneiden, insbesondere zweischneidig mit punktsymmetrisch angeordneten Stirn- und Umfangsschneiden, ausgebildet.

Weitere vorteilhafte Weiterbildungen sind Gegenstand abhängiger Ansprüche.

In einer bevorzugten Weiterbildung erstreckt sich das Spanfenster in Radialrichtung im Wesentlichen bis zum Grund der in Umfangsrichtung benachbarten Spannut der nacheilenden Schneidstufe. Das Spanfenster hat damit eine ausreichende radiale Tiefe, die ermöglicht, dass die in der voreilenden Schneidstufe erzeugten Späne in die in Umfangsrichtung benachbarte Spannut der nacheilenden Schneidstufe übertreten und dort in Richtung Werkzeugschaft weitergeleitet werden können.

Das Spanfenster ist in Vorschubrichtung vorzugsweise so angeordnet, dass es zumindest den Beginn der nacheilenden Schneidstufe erfasst, im Besonderen so, dass eine zugeordnete Stirnschneide der nacheilenden Schneidstufe im Wesentlichen mittig im Spanfenster liegt. Durch diese Lage wird sichergestellt, dass für den Weitertransport der in der voreilenden Schneidstufe erzeugten Späne die maximale Länge der Spannut der nacheilenden Schneidstufe zur Verfügung steht. Die über das Spanfenster aus der Spannut der voreilenden Schneidstufe in die in Umfangsrichtung benachbarte Spannut der nacheilenden Schneidstufe ausweichenden Späne werden damit von Beginn der nacheilenden Schneidstufe an zusammen mit den in der nacheilenden Schneidstufe erzeugten Spänen in Richtung Werkzeugschaft geleitet.

Die radiale Tiefe wie auch die axiale Länge, d.h. die Größe, des Spanfensters können in Abhängigkeit von dem zu bearbeitenden Material bzw. der durchschnittlichen Größe (Länge, Dicke, Breite) der in der voreilenden Schneidstufe zu erwartenden Späne festgelegt werden. Konkret heißt das, dass bei relativ langen Spänen ein eher tieferes längeres Spanfenster vorgesehen werden kann, während bei relativ kurzen Spänen ein flacheres kürzeres Spanfenster ausreichen kann. Durch eine den jeweiligen Fertigungsbedingungen Rechnung tragende Gestaltung des Spanfensters kann der Spanübertritt von der Spannut der voreilenden Schneidstufe in die in Umfangsrichtung benachbarte Spannut der nacheilenden Schneidstufe verbessert werden.

Das Spanfenster ist in Axialrichtung von der Werkzeugspitze in Richtung Werkzeugschaft vorzugsweise in einen in der radialen Tiefe zunehmenden Spanfenstereinlauf, einen an den Spanfenstereinlauf anschließenden, vorzugsweise achsparallel verlaufenden Spanfenstergrund und einen an den Spanfenstergrund anschließenden, in der radialen Tiefe abnehmenden Spanfensterauslauf unterteilt. Die Länge des vorzugsweise achsparallel laufenden Spanfenstergrunds kann den jeweiligen Erfordernissen entsprechend festgelegt sein. Beispielsweise kann der Spanfenstergrund sehr kurz bemessen sein, wodurch das Spanfenster bei seitlicher Betrachtung die Form einer konkaven Aussparung aufweist. Durch eine längere Bemessung des Spanfenstergrundes kann das Spanfenster eine längliche Gestalt aufweisen. Der Spanfenstereinlauf und der Spanfensterauslauf sind vorzugsweise jeweils als konkav gekrümmte Flächen ausgebildet. Der Spanfenstergrund ist vorzugsweise aus einer ebenen Fläche von vorgegebener axialer Länge oder aus einer beispielsweise konkav gekrümmten Fläche von vorgegebener axialer Länge gebildet.

Der Spanfenstergrund ist vorzugsweise unter einem vorgegebenen Winkel zur Spanfläche bzw. einer die Spanfläche der nacheilenden Schneidstufe verlängernden Spannutfläche der in Umfangsrichtung benachbarten Spannut geneigt. Durch die Schrägstellung des Spanfenstergrundes gegenüber der Spanfläche oder einer die Spanfläche verlängernden Spannutfläche der in Umfangsrichtung benachbarten Spannut der nacheilenden Schneidstufe lässt sich der Unterschied in der radialen Tiefe zwischen der Spannut der voreilenden Schneidstufe und der Spannut der nacheilenden Schneidstufe nach und nach reduzieren, wodurch der Überlauf der Späne von der Spannut der voreilenden Schneidstufe in die in Umfangsrichtung benachbarte Spannut der nacheilenden Schneidstufe verbessert wird.

Weiter kann das Spanfenster in Richtung des Durchbruchs durch den zwischen den in Umfangsrichtung benachbarten Spannuten liegenden Steg im Wesentlichen radial zur Drehachse des Mehrfasen-Stufenwerkzeugs bzw. zur Längserstreckungsrichtung der beiden Spannuten oder aber unter einem Winkel kleiner 90° zur Drehachse des Mehrfasen-Stufenwerkzeugs bzw. zur Längserstreckungsrichtung der Spannut der jeweils nacheilenden Schneidstufe hin orientiert sein. Die Ausrichtung des Spanfensters unter einem Winkel kleiner 90° zur Drehachse bzw. Längserstreckungsrichtung der Spannut ist im Vergleich zu einer im Wesentlichen radialen Ausrichtung insofern von Vorteil, als die durch das Spanfenster von der Spannut der voreilenden Schneidstufe in die in Umfangsrichtung benachbarte Spannut der nacheilenden Schneidstufe weniger stark umgelenkt werden, wodurch die Spanabfuhr insgesamt verbessert wird.

In einer bevorzugten Weiterbildung weist das erfindungsgemäße Mehrfasen-Stufenwerkzeug einen einstückig ausgebildeten Trägerkörper aus Vollhartmetall und am Trägerkörper angeordnete PKD (Polykristalliner Diamant)-Schneidplatten auf. In dieser Weiterbildung ist das Spanfenster der voreilenden Schneidstufe hinsichtlich axialer Länge und axialer Lage auf die axiale Länge und axiale Lage einer zugeordneten Schneidplatte der nacheilenden Schneidstufe abgestimmt.

Der Spannuten können spiralförmig ausgebildet sein, vorzugsweise sind sie aber geradlinig ausgebildet.

Das erfindungsgemäße Mehrfasen-Stufenwerkzeug weist ferner vorzugsweise ein innen liegendes, für eine Minimalmengenschmierung ausgelegtes Kanalsystem zur Versorgung einer oder mehrerer Schneidstufen mit Kühl-/Schmiermittel auf. Die Kühl-/Schmiermittelzufuhr erfolgt dabei vorzugsweise über Mündungsöffnungen, die jeweils im Bereich einer stirnseitigen Freifläche, d.h. in Schnittrichtung hinter einer zugeordneten Stirnschneide, der voreilenden Schneidstufe liegen. Bei einem Mehrfasen-Stufenwerkzeug mit mehreren Schneidstufen kann es genügen, wenn lediglich bestimmte Schneidstufe(n), beispielsweise im Fall dreier Schneidstufen nur die erste und zweite Schneidstufe, deren Späne über eine längere Wegstrecke in Richtung Werkzeugschaft abgeführt werden müssen, mit Schmiermittel versorgt werden. In jedem Fall kann das stirnseitig im Bereich der Freifläche austretende Schmiermittel über die in Umfangsrichtung benachbarte Spannut der in Schnittrichtung nacheilenden Schneidstufe abfließen und dadurch die Spanabfuhr in der nacheilenden Schneidstufe unterstützen.

Nachstehend wird anhand von Zeichnungen ein Ausführungsbeispiel eines erfindungsgemäßen Mehrfasen-Stufenwerkzeugs erläutert. Es zeigen:
Fig. 1a eine Seitenansicht einer Ausführungsform eines mehrschneidigen Stufenbohrers;
Fig. 1b eine Stirnansicht des Stufenbohrers aus Fig. 1a;
Fig. 2a eine gegenüber der Seitenansicht gemäß Fig. 1a um -40° um die Drehachse gedrehte Seitenansicht des Stufenbohrers;
Fig. 2b eine gegenüber der Stirnansicht gemäß Fig. 1b um -40° um die Drehachse gedrehte Stirnansicht des Stufenbohrers
Fig. 3a eine gegenüber der Seitenansicht gemäß Fig. 1a um -70° um die Drehachse gedrehte Seitenansicht des Stufenbohrers;
Fig. 3b eine gegenüber der Stirnansicht gemäß Fig. 1b um -70° um die Drehachse gedrehte Stirnansicht des Stufenbohrers;
Fig. 3c eine im Maßstab vergrößerten Ansicht der Werkzeugspitze des Stufenbohrers aus Fig. 3a; und

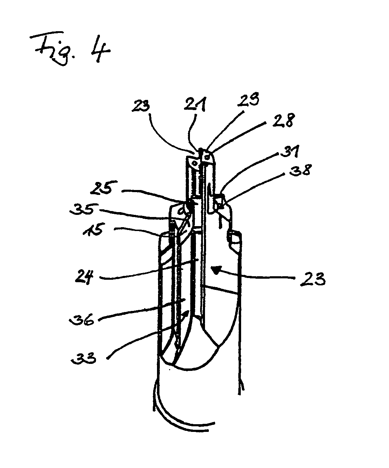

Fig. 4 eine perspektivische Darstellung des Stufenbohrers gemäß den Fign. 1a bis 3c.

In den Figuren ist mit dem Bezugszeichen 10 ein mehrschneidiges spanabhebendes und drehangetriebenes Mehrfasen-Stufenwerkzeug in Gestalt eines Stufenbohrers angegeben. Der Stufenbohrer 10 dient zur Anfertigung von gestuften Bohrungen, wie sie beispielsweise als Injektorbohrungen in Zylinderblöcken in der Automobiltechnik zur Aufnahme von Kraftstoffinjektoren benötigt werden. Es wird darauf hingewiesen, dass die in den Figuren enthaltenen Maß- und Bearbeitungsangaben sich auf lediglich ein Ausführungsbeispiel eines Mehrfasen-Stufenwerkzeugs beziehen.

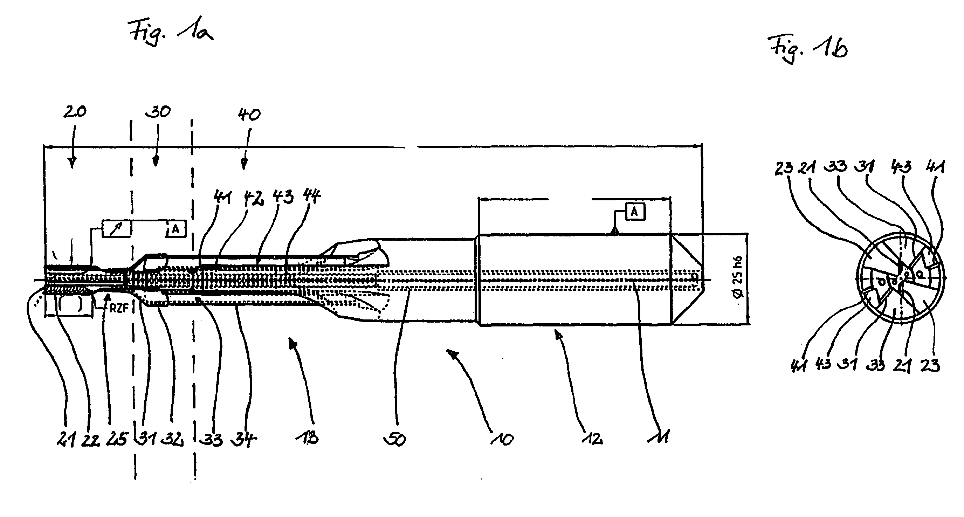

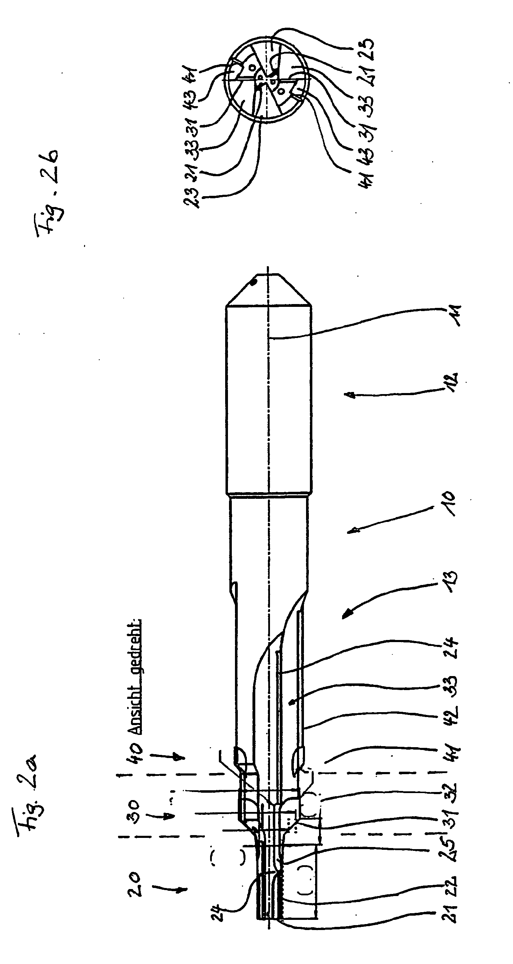

Der Stufenbohrer 10 hat einen Werkzeugschaft 12 zur Einspannung in einem (nicht gezeigten) Spannfutter und einen Schneidteil 13. Der Stufenbohrer 10 hat beispielsweise eine Länge von ca. 191,5 mm und einen Werkzeugschaftdurchmesser von etwa 25 mm. In dem gezeigten Ausführungsbeispiel weist der Stufenbohrer 10 drei Schneidenstufen 20, 30 und 40 auf, wobei die erste Schneidstufe 20 einen Nenndurchmesser D20, die zweite Schneidstufe 30 einen etwas größeren Nenndurchmesser D30 und die dritte Schneidstufe 40 einen wiederum größeren Nenndurchmesser D40 hat. Das Maß D20 beträgt beispielsweise etwa 7,7 mm, das Maß D30 etwa 18 mm und das Maß D40 etwa 23,7 mm. Sämtliche Nenndurchmesser sind äußerst eng toleriert. Die erste, zweite und dritte Schneidstufe 20, 30, 40 sind, wie aus den Figuren ersichtlich, in Schnitt- und Vorschubrichtung gestaffelt angeordnet, und zwar so, dass der Winkelabstand zwischen der ersten und der zweiten Schneidstufe etwa -40° und der Winkelabstand zwischen der ersten und der dritten Schneidstufe etwa -70° beträgt. In den Fign. 1a, 2a ist der Beginn der zweiten und dritten Schneidstufe 30, 40 jeweils durch gestrichelte Linien angedeutet.

Die erste, zweite und dritte Schneidstufe 20, 30, 40 sind in dem gezeigten Ausführungsbeispiel jeweils zweischneidig, d.h. mit jeweils zwei Stirnschneiden 21, 31, 41 und zwei Umfangsschneiden 22, 32, 42, sowie entsprechend der Anzahl der Schneiden mit jeweils zwei Spannuten 23, 33, 43 ausgebildet (vgl. Fign. 1b, Fig. 2b). Die Spannuten 23, 33, 43 sind, wie aus den Figuren ersichtlich, jeweils von Beginn der jeweiligen Schneidstufe 20, 30, 40 bis zu deren Auslauf kurz vor dem Werkzeugschaft 12 durchgängig und geradlinig ausgebildet. In Umfangsrichtung benachbarte Spannuten 23, 33 bzw. 33, 43 sind jeweils durch einen Steg 24, 34, 44 voneinander abgegrenzt. Durch die aus den Figuren ersichtliche Staffelung der ersten, zweiten und dritten Schneidstufe 20, 30, 40 in Schnitt- und Vorschubrichtung bildet die erste Schneidstufe 20 eine in Bezug auf die zweite Schneidstufe 30 in Schnitt- und Vorschubrichtung voreilende Schneidstufe, während die zweite Schneidstufe 30 eine in Bezug auf die erste Schneidstufe 20 in Schnitt- und Vorschubrichtung nacheilende Schneidstufe sowie eine in Bezug auf die dritte Schneidstufe 40 voreilende Schneidstufe bildet. Die dritte Schneidstufe 40 bildet wiederum eine in Bezug auf die zweite Schneidstufe 30 in Schnitt- und Vorschubrichtung nacheilende Schneidstufe.

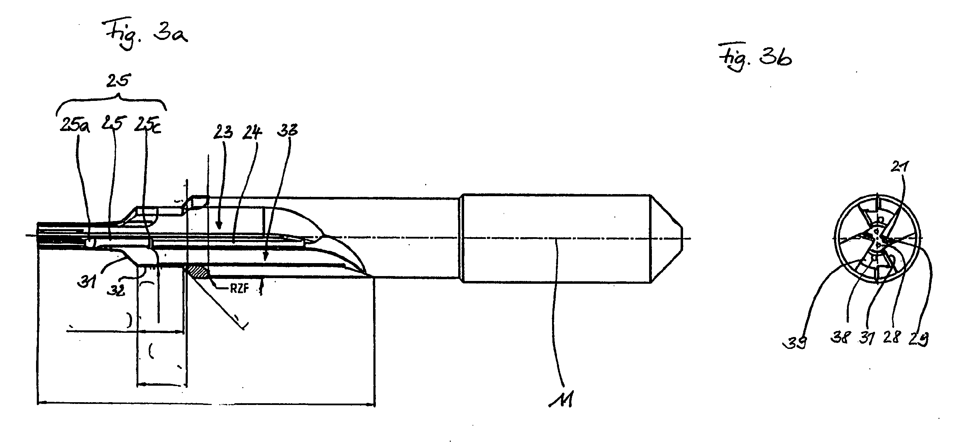

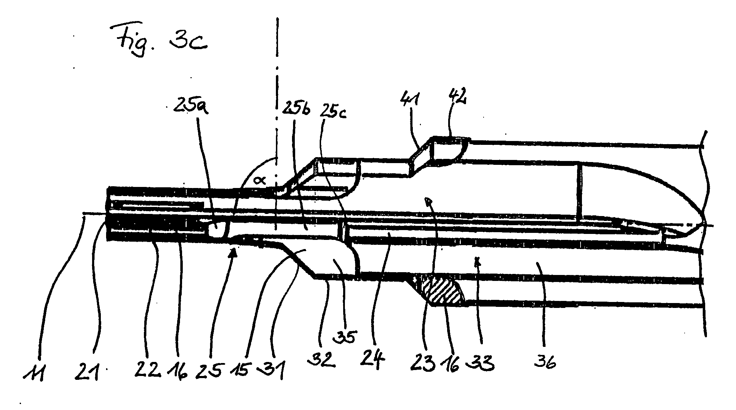

In dem gezeigten Ausführungsbeispiel weist der Stufenbohrer 10 einen einstückig ausgebildeten Trägerkörper aus Vollhartmetall und am Trägerkörper angeordnete PKD (Polykristalliner Diamant)-Schneidplatten 14, 15, 16 auf, die jeweils eine Stirn- und eine Umfangsschneide 21, 22, 31, 32 bzw. 41, 42 (vgl. Fig. 3c) bilden.

In dem in den Figuren gezeigten Ausführungsbeispiel sind die in Umfangsrichtung benachbarten Spannuten 23, 33 der ersten und zweiten Schneidstufe 20, 30 über ein umfangsseitig offenes, den dazwischen liegenden Steg 24 durchbrechendes Spanfenster 25 miteinander verbunden. In dem gezeigten Ausführungsbeispiel erstreckt sich das den Steg 24 durchbrechende Spanfenster 25 in Radialrichtung im Wesentlichen bis zum Grund der in Umfangsrichtung benachbarten Spannut 33 der nacheilenden, zweiten Schneidstufe 30. Das Spanfenster 25 erstreckt sich in Vorschubrichtung bis zum Beginn der zweiten Schneidstufe 30, und zwar im Besonderen so weit, dass die nächstliegende Stirnschneide 31 der zweiten Schneidstufe 30 im Wesentlichen mittig im Spanfenster 25 liegt (vgl. Fig. 2a).

Das Spanfenster 25 ist in Axialrichtung von der Werkzeugspitze in Richtung Werkzeugschaft 12 in einen in der radialen Tiefe zunehmenden Spanfenstereinlauf 25a, einen an den Spanfenstereinlauf 25a anschließenden, achsparallel verlaufenden Spanfenstergrund 25b und einen an den Spanfenstergrund 25b anschließenden, in der radialen Tiefe abnehmenden Spanfensterauslauf 25c unterteilt (vgl. die Fign. 3a, 3c). In dem gezeigten Ausführungsbeispiel sind der Spanfenstereinlauf 25a und der Spanfenstereinlauf 25c mit dem dazwischen liegenden Spanfenstergrund 25b ein Spanfenster so ausgebildet, dass das Spanfenster 25 in Richtung des Durchbruchs durch den Steg 24 in Bezug zur Drehachse 11 des Stufenbohrers bzw. in Bezug zur Längserstreckungsrichtung der Spannut 33 der zweiten Schneidstufe 30 im Wesentlichen radial ausgerichtet ist (vgl. in Fig. 3c: α ≈= 90°).

Die Länge des achsparallel laufenden Spanfenstergrunds 25b entspricht in dem gezeigten Ausführungsbeispiel im Wesentlichen der Länge der PKD-Schneidplatte 15, die die Stirn- und Umfangsschneide 31, 32 der zweiten Schneidstufe 30 bildet. Der Spanfenstereinlauf 25a und der Spanfensterauslauf 25b sind jeweils als konkav gekrümmte Flächen ausgebildet. Der Spanfenstergrund 25b ist in dem gezeigten Ausführungsbeispiel aus einer ebenen Fläche von vorgegebener axialer Länge gebildet. Des Weiteren ist der der Spanfenstergrund 25b unter einem vorgegebenen Winkel, im gezeigten Ausführungsbeispiel von etwa 5°, zu der die Spanfläche 35 der zweiten Schneidstufe 30 verlängernden Spannutfläche 36 der Spannut 33 hin geneigt.

Das Werkzeug 10 verfügt über eine Kühl-/Schmiermittelversorgung der ersten und zweiten Schneidstufe 20, 30 durch ein innenliegendes, für eine Minimalmengenschmierung ausgelegtes Kanalsystem 50, das in Fig. 1a gestrichelt angedeutet ist. Die Kühl-/Schmiermittelzufuhr erfolgt über Mündungsöffnungen 28, 38, die jeweils im Bereich einer stirnseitigen Freifläche 29, 39, d.h. in Schnittrichtung hinter, einer zugeordneten Stirnschneide 21, 31 ersten bzw. zweiten Schneidstufe 20, 30 liegen.

Selbstverständlich sind Abweichungen von den beschriebenen Ausführungsbeispielen möglich, ohne den Schutzumfang der Erfindung zu verlassen.

So können in dem gezeigten Ausführungsbeispiel nicht nur zwischen den in Umfangsrichtung benachbarten Spannuten 23, 33 der ersten und zweiten Schneidstufen 20, 30 sondern auch zwischen den in Umfangsrichtung benachbarten Spannuten der zweiten und dritten Schneidstufe 30, 40 Spanfenster vorgesehen sein.

Anstelle dreier Schneidstufen kann ein erfindungsgemäßes Mehrfasen-Stufenwerkzeug lediglich zwei oder aber mehr als drei Schneidstufen aufweisen. Sind mehr als drei Schneidstufen vorhanden, können beliebige in Umfangsrichtung benachbarten Spannuten einer in Schnitt- und Vorschubrichtung vor- und nacheilenden Schneidstufe über ein den dazwischen liegenden Steg durchbrechendes Spanfenster verbunden sein.

Abweichend von dem gezeigten Ausführungsbeispiel, in dem das Spanfenster 25 im Wesentlichen radial zur Drehachse 11 bzw. zur Längserstreckungsrichtung der Spannuten der jeweils nacheilenden Schneidstufe ausgerichtet ist, können der Spanfenstereinlauf 25a und der Spanfensterauslauf 25c mit dem dazwischen liegenden Spanfenstergrund 25b auch so ausgebildet sein, dass das Spanfenster 25 unter einem Winkel α < 90° zur Drehachse 11 bzw. zur Längserstreckungsrichtung der Spannuten der jeweils nacheilenden Schneidstufe hin orientiert ist.

Die verschiedenen Schneidstufen können abweichend von dem gezeigten Ausführungsbeispiel jeweils einschneidig ausgebildet sein oder aber mehr als zwei Schneiden aufweisen.

Des Weiteren können statt einiger ausgewählter auch sämtliche Schneidstufen mit Kühl-/Schmiermittel versorgt werden.

## Patentansprüche

1. Drehangetriebenes Mehrfasen-Stufenwerkzeug, insbesondere Stufenbohrer zum Bohren ins Volle, mit mehreren in Schnitt- und Vorschubrichtung gestaffelt angeordneten, jeweils ein- oder mehrschneidigen Schneidstufen (20, 30, 40) mit jeweils einer der Anzahl der Schneiden (21, 22, 31, 32, 41, 42) entsprechenden Anzahl von Spannuten (23, 33, 43), wobei in Umfangsrichtung benachbarte Spannuten (23, 33) jeweils durch einen Steg (24) voneinander abgegrenzt sind, **dadurch gekennzeichnet, dass** die in Umfangsrichtung benachbarten Spannuten (23, 33) zweier in Schnitt- und Vorschubrichtung aufeinanderfolgender Schneidstufen (20, 30) über ein umfangsseitig offenes den dazwischen liegenden Steg (24) durchbrechendes Spanfenster (25) miteinander verbunden sind.

2. Mehrfasen-Stufenwerkzeug nach Anspruch 1, **dadurch gekennzeichnet, dass** das Spanfenster (25) sich in Radialrichtung im Wesentlichen bis zum Spannutgrund der Spannut (33) der nacheilenden Schneidstufe (30) erstreckt.

3. Mehrfasen-Stufenwerkzeug nach Anspruch 1 oder 2, **dadurch gekennzeichnet, dass** das Spanfenster (25) sich in axialer Richtung zum Werkzeugschaft (12) hin zumindest bis zum Beginn der nacheilenden Schneidstufe (30) erstreckt.

4. Mehrfasen-Stufenwerkzeug nach Anspruch 3, **dadurch gekennzeichnet, dass** das Spanfenster (25) sich in axialer Richtung zum Werkzeugschaft (12) hin soweit erstreckt, dass eine nächstliegende Stirnschneide (31) der nacheilenden Schneidstufe (30) im Wesentlichen mittig im Spanfenster (25) liegt und/oder wobei das Spanfenster (25) eine vorgegebene axiale Länge hat, die in Abhängigkeit von der Spangröße der in der voreilenden Schneidstufe (20) erzeugten Späne festgelegt ist.

5. Mehrfasen-Stufenwerkzeug nach einem der Ansprüche 1 bis 4, **dadurch gekennzeichnet, dass** das Spanfenster (25) in axialer Richtung zum Werkzeugschaft (12) hin in einen in der radialen Tiefe zunehmenden Spanfenstereinlauf (25a), einen an den Spanfenstereinlauf (25a) anschließenden, vorzugsweise achsparallel verlaufenden Spanfenstergrund (25b) und einen an den Spanfenstergrund (25b) anschließenden, in der radialen Tiefe abnehmenden Spanfensterauslauf (25c) unterteilt ist.

6. Mehrfasen-Stufenwerkzeug nach Anspruch 5, **dadurch gekennzeichnet, dass** der Spanfenstergrund (25b) aus einer ebenen Fläche gebildet ist.

7. Mehrfasen-Stufenwerkzeug nach Anspruch 5 oder 6, **dadurch gekennzeichnet, dass** der Spanfenstergrund (2b) unter einem vorgegebenen Winkel zur Spanfläche (35) oder einer die Spanfläche (35) verlängernden Spannutfläche (36) der in Umfangsrichtung benachbarten Spannut (33) der nacheilenden Schneidstufe (30) hin geneigt ist.

8. Mehrfasen-Stufenwerkzeug nach einem der Ansprüche 5 bis 7, **dadurch gekennzeichnet, dass** der Spanfenstereinlauf (25a) und der Spanfensterauslauf (25b) jeweils als konkav gekrümmte Flächen ausgebildet sind.

9. Mehrfasen-Stufenwerkzeug nach einem der Ansprüche 1 bis 8, **dadurch gekennzeichnet, dass** das Spanfenster (25) in Richtung des Durchbruchs durch den zwischen den in Umfangsrichtung benachbarten Spannuten (23, 33) liegenden Stegs (24) unter einem vorgegebenen Winkel (α < 90°) zur Drehachse (11) des Mehrfasen-Stufenwerkzeugs bzw. zur Längserstreckungsrichtung der Spannuten (23, 33) ausgerichtet ist.

10. Mehrfasen-Stufenwerkzeug nach einem der Ansprüche 1 bis 9, **gekennzeichnet durch** einen vorzugsweise einstückig ausgebildeten Trägerkörper aus Vollhartmetall und **dadurch**, dass die Schneide(n) (21, 22, 31, 32, 41 , 42) der Schneidstufen (20, 30, 40) von am Trägerkörper angeordneten PKD-Schneidplatten (14, 15, 16) gebildet sind.

11. Mehrfasen-Stufenwerkzeug nach Anspruch 10, **dadurch gekennzeichnet, dass** das Spanfenster (25) hinsichtlich axialer Länge und axialer Lage mit der axialen Länge und axialen Lage einer nächstliegenden Schneidplatte (15) der nacheilenden Schneidstufe (20) übereinstimmt.

12. Mehrfasen-Stufenwerkzeug nach einem der Ansprüche 1 bis 11, **dadurch gekennzeichnet, dass** die Spannuten (23, 33, 43) geradlinig ausgebildet sind.

13. Mehrfasen-Stufenwerkzeug nach einem der Ansprüche 1 bis 12, **gekennzeichnet durch** ein innen liegendes, für eine Minimalmengenschmierung ausgelegtes Kanalsystem (50) zur Versorgung des Mehrfasen-Stufenwerkzeugs mit Kühl-/Schmiermittel.

14. Mehrfasen-Stufenwerkzeug nach Anspruch 13, **dadurch gekennzeichnet, dass** die Kühl-/Schmiermittelzufuhr einer oder mehrerer Schneidstufen (20, 30) über Mündungsöffnungen (28, 38) erfolgt, die jeweils in einer stirnseitigen Freifläche (29, 39) hinter einer zugeordneten Stirnschneide (21, 31) liegen.

15. Mehrfasen-Stufenwerkzeug nach einem der Ansprüche 1 bis 14, **dadurch gekennzeichnet, dass** die Schneidstufen (20, 30, 40) jeweils mehrschneidig mit in Umfangsrichtung äquidistant angeordneten Stirn- und Umfangsschneiden (21, 22, 31, 32, 41, 42), insbesondere zweischneidig mit punktsymmetrisch angeordneten Stirn- und Umfangsschneiden (21, 22, 31, 32, 41, 42), ausgebildet sind.

## Claims

1. Rotationally driven multi-bevel step tool , particularly step drill for drilling into solid material, with a plurality of in each case single- or multi-edged cutting steps (20, 30, 40) arranged in a staggered manner in cutting and feed direction with a number of flutes (23, 33, 43) corresponding to the number of cutting edges (21, 22, 31, 32, 41, 42) in each case, wherein flutes (23, 33) which are adjacent in circumferential direction are separated from one another by a web (24), **characterized in that** the flutes (23, 33), which are adjacent to each other in circumferential direction, of two, in cutting and feed direction, successive cutting steps (20, 30) are connected by means of a swarf window (25) which penetrates the web (24) located therebetween and is open on the circumferential side.

2. Multi-bevel step tool according to claim 1, **characterized in that** the swarf window (25) extends in radial direction essentially as far as the base of the flute (33) of the trailing cutting step (30).

3. Multi-bevel step tool according to claim 1 or 2, **characterized in that** the swarf window (25) extends in axial direction towards the tool shank (12) at least as far as the start of the trailing cutting step (30).

4. Multi-bevel step tool according to claim 3, **characterized in that** the swarf window (25) extends in axial direction towards the tool shank (12) to such an extent that a closest front cutting edge (31) of the trailing cutting step (30) is located essentially centrally in the swarf window (25) and/or wherein the swarf window (25) has a predetermined axial length, which is determined as a function of the swarf size of the swarf produced in the leading cutting step (20).

5. Multi-bevel step tool according to any one of claims 1 to 4, **characterized in that** the swarf window (25) is divided in axial direction towards the tool shank (12) in a swarf window inlet (25a) of increasing radial depth, a swarf window base (25b) which is adjacent to the swarf window inlet (25a) and preferably runs axially parallel, and a swarf window outlet (25c) of decreasing radial depth which is adjacent to the swarf window base (25b).

6. Multi-bevel step tool according to claim 5, **characterized in that** the swarf window base (25b) is formed from a planar surface.

7. Multi-bevel step tool according to claim 5 or 6, **characterized in that** the swarf window base (25b) is inclined by a predetermined angle with respect to the milling face (35) or a flute face (36), which extends the milling face (35), of the flute (33), which is adjacent in circumferential direction, of the trailing cutting step (30).

8. Multi-bevel step tool according to any one of claims 5 to 7, **characterized in that** the swarf window inlet (25a) and the swarf window outlet (25b) are in each case constructed as concavely curved surfaces.

9. Multi-bevel step tool according to any one of claims 1 to 8, **characterized in that** the swarf window (25) is oriented in the direction of the opening through the web (24) located between the flutes (23, 33) which are adjacent in circumferential direction at a predetermined angle (α≤90°) relative to the rotational axis (11) of the multi-bevel step tool or relative to the direction of longitudinal extent of the chip flutes (23, 33).

10. Multi-bevel step tool according to any one of claims 1 to 9, **characterized by** a preferably integrally constructed support body made from solid carbide and in that the cutting edge(s) (21, 22, 31, 32, 41, 42) of the cutting steps (20, 30, 40) are formed by PCD (polycrystalline diamond) cutting plates (14, 15, 16) arranged on the support body.

11. Multi-bevel step tool according to claim 10, **characterized in that** the swarf window (25) corresponds with respect to axial length and axial position to the axial length and axial position of a closest cutting plate (15) of the trailing cutting step (20).

12. Multi-bevel step tool according to any one of claims 1 to 11, **characterized in that** the flutes (23, 33, 43) are constructed linearly.

13. Multi-bevel step tool according to any one of claims 1 to 12, **characterized by** an internally located channel system (50) designed for minimum quantity lubrication, for supplying the multi-bevel step tool with coolant/lubricant.

14. Multi-bevel step tool according to claim 13, **characterized in that** coolant/lubricant supply of one or a plurality of cutting steps (20, 30) takes place via discharge openings (28, 38), which are in each case located in a front open area (29, 39) behind an assigned front cutting edge (21,31).

15. Multi-bevel step tool according to any one of claims 1 to 14, **characterized in that** the cutting steps (20, 30, 40) are constructed in a multi-edged manner in each case with front and circumferential cutting edges (21, 22, 31, 32, 41, 42) equidistantly arranged in circumferential direction, particularly in a double edged manner with front and circumferential cutting edges (21, 22, 31, 32, 41, 42) arranged point-symmetrically.

## Revendications

1. Outil étagé à plusieurs facettes entraîné en rotation, en particulier foret étagé pour perçage, avec plusieurs étages de coupe (20, 30, 40) échelonnés en direction de coupe et d'avance, à une ou plusieurs arêtes de coupe chacun, avec un nombre de gorges de dégagement (23, 33, 43) correspondant au nombre d'arêtes de coupe (21, 22, 31, 32, 41, 42), les gorges de dégagement (23, 33) adjacentes en direction périphérique étant séparées l'une de l'autre par une nervure (24), **caractérisé en ce que** les gorges de dégagement (23, 33) adjacentes en direction périphérique de deux étages de coupe (20, 30) successifs en direction de coupe et d'avance sont reliées l'une à l'autre par une fenêtre de dégagement (25) ouverte sur la périphérie traversant la nervure (24) interposée.

2. Outil étagé à plusieurs facettes selon la revendication 1, **caractérisé en ce que** la fenêtre de dégagement (25) s'étend en direction radiale sensiblement jusqu'au fond de la gorge de dégagement (33) de l'étage de coupe (30) suivant.

3. Outil étagé à plusieurs facettes selon la revendication 1 ou 2, **caractérisé en ce que** la fenêtre de dégagement (25) s'étend en direction axiale vers la queue d'outil (12) au moins jusqu'au début de l'étage de coupe (30) suivant.

4. Outil étagé à plusieurs facettes selon la revendication 3, **caractérisé en ce que** la fenêtre de dégagement (25) s'étend en direction axiale vers la queue d'outil (12) de manière qu'une arête de coupe frontale (31) contigue de l'étage de coupe (30) suivant soit située sensiblement au centre de la fenêtre de dégagement (25), et/ou dans lequel la fenêtre de dégagement (25) présente une longueur axiale définie, fixée en fonction de la taille des copeaux produits dans l'étage de coupe (20) précédent.

5. Outil étagé à plusieurs facettes selon l'une des revendications 1 à 4, **caractérisé en ce que** la fenêtre de dégagement (25) est en direction axiale vers la queue d'outil (12) divisée en une entrée de fenêtre de dégagement (25a) s'agrandissant en profondeur radiale, un fond de fenêtre de dégagement (25b) adjacent à l'entrée de fenêtre de dégagement (25a), à extension de préférence axialement parallèle, et une sortie de fenêtre de dégagement (25c) adjacente au fond de fenêtre de dégagement (25b), se rétrécissant en profondeur radiale.

6. Outil étagé à plusieurs facettes selon la revendication 5, **caractérisé en ce que** le fond (25b) de la fenêtre de dégagement est formé par une surface plane.

7. Outil étagé à plusieurs facettes selon la revendication 5 ou 6, **caractérisé en ce que** le fond de fenêtre de dégagement (25b) est incliné suivant un angle défini vers la face de dégagement (35) ou une surface de gorge de dégagement (36) prolongeant la face de dégagement (35) de la gorge de dégagement (33) contiguë en direction périphérique de l'étage de coupe (30) suivant.

8. Outil étagé à plusieurs facettes selon l'une des revendications 5 à 7, **caractérisé en ce que** l'entrée de fenêtre de dégagement (25a) et la sortie de fenêtre de dégagement (25b) sont respectivement réalisées comme surfaces à courbure concave.

9. Outil étagé à plusieurs facettes selon l'une des revendications 1 à 8, **caractérisé en ce que**, dans la direction du passage au travers de la nervure (24) située entre les gorges de dégagement (23, 33) contiguës en direction périphérique, la fenêtre de dégagement (25) est orientée suivant un angle défini (α < 90°) par rapport à l'axe de rotation (11) de l'outil étagé à plusieurs facettes ou par rapport à l'extension longitudinale des gorges de dégagement (23, 33).

10. Outil étagé à plusieurs facettes selon l'une des revendications 1 à 9, **caractérisé par** un corps de support préférentiellement réalisé d'une seule pièce en métal dur massif, et en ce que le ou les arêtes de coupe (21, 22, 31, 32, 41, 42) des étages de coupe (20, 30, 40) sont formées par des plaquettes de coupe en PCD (14, 15, 16) disposées sur le corps de support.

11. Outil étagé à plusieurs facettes selon la revendication 10, **caractérisé en ce que** la fenêtre de dégagement (25) correspond, quant à sa longueur axiale et sa situation axiale, à la longueur axiale et à la situation axiale d'une plaquette de coupe (15) adjacente de l'étage de coupe (20) adjacent.

12. Outil étagé à plusieurs facettes selon l'une des revendications 1 à 11, **caractérisé en ce que** les gorges de dégagement (23, 33, 43) sont réalisées en ligne droite.

13. Outil étagé à plusieurs facettes selon l'une des revendications 1 à 12, **caractérisé par** un système de canal (50) interne, conçu pour une lubrification minimale, afin d'alimenter l'outil étagé à plusieurs facettes en fluide réfrigérant/lubrifiant.

14. Outil étagé à plusieurs facettes selon la revendication 13, **caractérisé en ce que** l'amenée de fluide réfrigérant/lubrifiant vers un ou plusieurs étages de coupe (20, 30) est effectuée par des orifices débouchants (28, 38) situés chacun sur une face de dépouille (29, 39) frontale derrière une arête de coupe frontale (21, 31) correspondante.

15. Outil étagé à plusieurs facettes selon l'une des revendications 1 à 14, **caractérisé en ce que** les étages de coupe (20, 30, 40) sont respectivement réalisés à plusieurs arêtes de coupe, avec des arêtes de coupe frontales et périphériques (21, 22, 31, 32, 41, 42) équidistantes en direction périphérique, en particulier à deux arêtes de coupe avec des arêtes de coupe frontales et périphériques (21, 22, 31, 32, 41, 42) symétriques par rapport à un point.
